# EUROPÄISCHE PATENTSCHRIFT

(11) **EP 0 985 901 B1**
(45) Veröffentlichungstag und Bekanntmachung des Hinweises auf die Patenterteilung: **08.10.2003**
(21) Anmeldenummer: 99112950.3
(22) Anmeldetag: 05.07.1999
(51) Int. Cl.: G01B 3/10

(54) **Messeil Wegsensor mit am Drehwinkelsensor befestigter Trommel und gerippten Halbschalen**
Measuring cable distance sensor with the drum fixed to the rotation angle sensor and ribbed half shells
Appareil de mesure de distances à câble avec tambour fixé au dispositif de mesure d'angle de rotation et demi coquilles nervurées

(30) Priorität: 27.08.1998 DE 19839028
(43) Veröffentlichungstag der Anmeldung: 15.03.2000
(73) Patentinhaber: ASM Automation Sensorik Messtechnik GmbH, 85452 Moosinning (DE)
(72) Erfinder: Steinich, Klaus-Manfred, 85604 Poering (DE)
(74) Vertreter: Alber, Norbert, Dipl.-Ing.

(56) Entgegenhaltungen:
- EP-A- 0 745 829
- US-A- 3 643 198
- US-A- 5 236 144

## Beschreibung

### I. Anwendungsgebiet

Die Erfindung betrifft Meßseil-Wegsensoren, also Wegsensoren nach dem Meßseilprinzip mit industrietauglichem Gehäuse. Derartige Wegsensoren bestehen aus einer exakt definierten und positionierten Seiltrommel, auf welche das Meßseil - in der Regel nur in einer einzigen Lage - aufgewickelt und mit dem einen Ende befestigt ist.

Das andere freie Ende des Meßseiles ist an demjenigen Gegenstand befestigt, dessen Lageveränderung exakt gemessen werden soll.

Bei relativer Entfernung dieses Gegenstandes von der Seiltrommel des Meßseil-Wegsensors werden die Winkelbewegungen der Meßseil-Trommel mittels eines damit drehfest gekoppelten Drehwinkelsensors in eine exakte Entfernungslänge umgerechnet. Eine in der Regel koaxial mit der Meßseil-Trommel wirkverbundene Drehfeder stellt bei der Wiederannäherung des zu messenden Gegenstandes das Aufrollen des Meßseiles auf der Meßseil-Trommel sicher.

### II. Technischer Hintergrund

Derartige Meßseil-Wegsensoren werden in den unterschiedlichsten technischen Aggregaten eingesetzt, beispielsweise zur Lagebestimmung von Fahrstuhlkabinen im Fahrstuhlschacht, bei der ständigen Überwachung der Winkelstellung von Höhenruder und Seitenruder in Flugzeugen und Ähnlichem.

Um die gewünschte Meßgenauigkeit dieser Meßseil-Wegsensoren zu erzielen, muß einerseits die absolute Winkeltreue zwischen Meßseil-Trommel und Drehwinkelsensor sichergestellt sein. Hierfür ist unter anderem unbedingt und unter allen Arbeitsbedingungen die freie ungehinderte Drehung der Meßseil-Trommel notwendig, da eine Hemmung der Meßseil-Trommel das Meßergebnis grob verfälschen würde. Daher muß die Meßseil-Trommel einerseits zuverlässig gelagert sein und andererseits darf keinesfalls ein Schleifen etc. der Meßseil-Trommel am Gehäuse oder einem anderen Bauteil aufgrund mechanischer Beanspruchung, Wärmeverzug etc. eines der Bauteile des Meßseil-Wegsensors auftreten.

Aus diesem Grund wurden die Gehäuse für Meßseil-Wegsensoren bisher aus einer Vielzahl von stabilen Metallteilen zusammengesetzt, nämlich einerseits Rohrabschnitten und andererseits Stirnplatten, die jeweils miteinander verschraubt wurden.

Die Herstellung von Spritzgußteilen aus Kunststoff oder Leichtmetall ist sowohl aus Stückzahlgründen als auch der nicht befriedigenden Genauigkeit gegenüber den spanend bearbeitbaren Rohrstücken und Stirnplatten weniger verbreitet gewesen.

Um eine zuverlässige Lagerung und Drehfreiheit der Meßseil-Trommel zu erzielen, wurde bisher die Meßseil-Trommel meist auf einer separaten, im Gehäuse gelagerten Welle drehfest angeordnet, und diese Welle der Meßseil-Trommel nicht direkt, sondern über eine Kupplung, welche den Winkelversatz auszugleichen vermag, mit dem Zapfen der Sensorwelle drehfest verbunden. Der Drehwinkelsensor selbst war dabei in der Regel auf der Außenseite des Gehäuses befestigt, so daß nur der vorstehende Zapfen der Sensorwelle in das Gehäuse hineinragte.

Diese Bauformen von Meßseil-Wegsensoren sind wegen der aufwendig zu bearbeitenden Metallteile für das Gehäuse kostenintensiv, und wegen der separaten Lagerung der Meßseil-Trommel und der dadurch notwendigen Winkelkupplung-Getriebe zum Drehwinkelsensor hin in axialer Richtung auch relativ groß.

Weiterhin sind aus der US-A-5236144 sowie der US-A-3643198 Lösungen bekannt, bei denen die Meßseil-Trommel zwar ohne winkelausgleichende Kupplung mit der Welle des Drehwinkelsensors verbunden ist durch einfaches Aufstecken. Das Aufstecken geschieht jedoch auf einem auf dem Zapfen der Drehwinkelsensorwelle bereits befestigten Adapters so, dass sich die Meßseiltrommel außerhalb des axialen Längenbereiches des Zapfens dieser Drehwinkelsensorwelle befindet, wodurch Kippbewegungen und Unwuchtigkeiten, die an der Meßseiltrommel auftreten, aufgrund des Vorhandenseins eines Hebelarmes vom Adapter auf den Zapfen der Welle übertragen werden.

### III. Darstellung der Erfindung

### a) Technische Aufgabe

Es ist daher die Aufgabe gemäß der Erfindung, einen Meßseil-Wegsensor zu schaffen, welches eine kompakte Baugröße, vor allem in axialer Richtung, ermöglicht und einfach und kostengünstig in der Herstellung ist.

### b) Lösung der Aufgabe

Diese Aufgabe wird durch die Merkmale des Anspruches 1 gelöst. Vorteilhafte Ausführungsformen ergeben sich aus den Unteransprüchen.

### c) Vorteile

Eine Verkürzung in axialer Richtung wird durch die Einsparung der Kupplung erzielt, was dadurch möglich ist, daß ein Winkelversatz zwischen der Welle der Meßseil-Trommel und der Sensorwelle vermieden wird, indem die Meßseil-Trommel auf den Zapfen der Sensorwelle aufgesteckt ist. Dabei muß die Meßseil-Trommel nicht direkt auf der Sensorwelle drehfest befestigt sein, sondern es kann auch ein dazwischen angeordneter konzentrischer Adapter benutzt werden. Dies hat den Vorteil, daß der Adapter in axialer Richtung über das freie Ende des Zapfens der Sensorwelle hinausragen kann, und als zentraler z. B. geschlitzter Mitnehmer für die axial zur Meßseil-Trommel beabstandete Drehfeder dienen kann.

Der Ausgangspunkt aller Stabilitätsüberlegungen für das Gehäuse ist somit die Verbindungsstelle zwischen dem Drehwinkelsensor und dem Gehäuse. Um eine kostengünstige Herstellung des Gehäuses als Spritzteil aus Kunststoff oder Leichtmetall, insbesondere aus Aluminium oder ZN-Druckguß, mit dem damit verbundenen zusätzlichen Gewichtsvorteil bei ausreichender Stabilität zu ermöglichen, besteht das Gehäuse aus zwei gegeneinandergelegten Halbschalen, der Drehfederschale und der Sensorschale, die beide im wesentlichen topfförmig ausgebildet sind.

Während jedoch die Drehfederschale einen geschlossenen Boden aufweist, besitzt die Sensorschale im Bodenbereich eine Sensoröffnung, durch welche der Zapfen der Sensorwelle des außen auf die Sensorschale aufgesetzten und dort befestigten Drehwinkelsensors in das Gehäuse hineinragen kann, um dort die aus Adapter und Meßseil-Trommel bestehende Baugruppe auf dem Zapfen der Sensorwelle mittels Klemmschrauben oder anderen bekannten Vorrichtungen drehfest anzuordnen.

Eine sehr einfache, aber dennoch sehr stabile Verbindung zwischen der Sensorschale und dem Drehwinkelsensor selbst wird dadurch geschaffen, daß auf der Innenseite der Sensorschale ein plattenförmiger Stabilisierungsring, der aus Metall besteht, und etwa die Größe der Stirnfläche des Drehwinkelsensors bzw. einen etwas größeren Außenumfang besitzt, angeordnet wird.

Dieser mit Gewindebohrungen versehene Stabilisierungsring wird - mit mehreren Schrauben über den Umfang verteilt - durch den Boden der Sensorschale hindurch mit Halteklammem verschraubt, welche den Drehwinkelsensor an der Sensorschale halten. Zu diesem Zweck weist der im wesentlichen zylindrische Drehwinkelsensor an seinem Außenumfang radial nach innen gerichtete Ausnehmungen, vorzugsweise eine umlaufende Ringnut, auf, in die die Nasen dieser Halteklammern eingreifen. Bei einer umlaufenden Ringnut im Drehwinkelsensor können daher statt einzelner Halteklammem zwei halbkreisförmige Ringklammern verwendet werden, die jeweils über mehrere Verschraubungen mit dem innenliegenden Stabilisierungsring verschraubt werden. Dies ergibt eine stabile und vor allem flächige, keine starken punktuellen Drehmomente zulassende, Verbindung zwischen Drehwinkelsensor und Sensorschale des Gehäuses.

Zusätzlich ist die Sensorschale außerhalb des Anlagebereiches des Stabilisierungsringes mit radial nach außen ansteigenden, über den gesamten Umfang verteilten ersten Radialrippen versteift. Diese gehen jedoch radial nicht bis zu den Seitenwänden der Sensorschale durch, sondern enden radial soweit innen, daß radial außerhalb dieser ersten Radialrippen der diese ersten Radialrippen axial hintergreifende, im Querschnitt T- oder L-förmige, Mantel der Meßseiltrommel rotieren kann. Erst außerhalb des Bereiches der hier rotierenden Meßseil-Trommel steigen dann zweite Radialrippen wiederum schräg ansteigend vom Boden der Sensorschale bis zu deren Seitenwänden an.

Während die Sensorschale im Querschnitt betrachtet nur einen einzigen Bereich gleicher Tiefe und gleichen freien Durchmessers besitzt, ist die Drehfederschale in axialer Richtung abgesetzt ausgeführt.

Der in axialer Richtung tiefe Bereich mit kleinerem Durchmesser nimmt die Drehfeder auf, während der radial darum herum angeordnete axial flachere Bereich der Dimensionierung der Sensorschale entspricht und wie diese die Meßseiltrommel aufnehmen muß, da sich die Berührungsebene zwischen Sensorschale und Drehfederschale axial betrachtet entweder im Bereich der Meßseiltrommel oder im Bereich zwischen Meßseiltrommel und Drehfeder, jedoch noch im Bereich des größeren Durchmessers der Drehfederschale befindet, um hier etwas Spielraum für unterschiedliche axiale Längen der Meßseil-Trommel zu haben.

Die Drehfeder-Schale ist ebenfalls in radialer Richtung verrippt, jedoch vorzugsweise mit im radialen Verlauf gleich hoch bleibenden Radialrippen, und zwar sowohl im Bereich des Bodens der kleineren Drehfederaufnahme, als auch im Bereich des radial darum herum außenliegenden Bodens. Am Übergang zwischen beiden Bereichen der Drehfederschale sind gegen die Sensorschale gerichtete Aufnahmezapfen angeordnet, auf welche ein Anlaufdeckel aufsteckbar ist, welcher den Aufnahmebereich für die Drehfeder stirnseitig abschließt, so daß die Drehfeder zwischen dem Boden des Aufnahmebereiches für die Drehfeder und diesem Anlaufdeckel beidseits stirnseitig gehalten wird, und somit an beiden Stirnseiten eine Anlauffläche besitzt.

Um ein Hintergreifen der ersten Radialrippen der Sensorschale durch den Mantel der Meßseil-Trommel zu ermöglichen, ist die Meßseil-Trommel im Querschnitt betrachtet T-förmig oder L-förmig gestaltet, also die Radialplatte der Meßseil-Trommel ist nicht auf der der Sensorschale zugewandten Stirnseite der Meßseil-Trommel angeordnet, sondern entweder mittig oder auf der hiervon abgewandten Stirnseite bezüglich des Mantels der Meßseil-Trommel.

Die Berührungsebene des Gehäuses erstreckt sich ferner auch durch den Seileinlaufstutzen hindurch, welcher insbesondere einstückig mit den jeweiligen Schalen des Gehäuses ausgebildet ist. Der Seileinlaufstutzen ist in mehrere Kammern unterteilt, die sich in unterschiedlichen radialen Abständen zur Achse des Gehäuses aneinander anschließen, um - je nach Durchmesser der Meßseil-Trommel in anderen Gegebenheiten - die Seilführungselemente für den Seileinlauf wahlweise in der einen oder anderen Kammer des Seileinlaufstutzens unterbringen zu können.

### d) Weitere Ausgestaltungen

Weiterhin ist das Gehäuse im wesentlichen viereckig ausgebildet, wobei die Verschraubungen zwischen den beiden Schalen des Gehäuses in den Eckbereichen angeordnet sind, wobei im einen Eckbereich auch der Seileinlaufstutzen angeordnet ist. In dieser Ecke befindet sich die Verschraubung zwischen den unterschiedlichen nutzbaren Kammern des Seileinlaufstutzens.

Die Befestigung des Gehäuses und damit des gesamten Meßseil-Wegsensors gegenüber anderen Baugruppen erfolgt nicht mittels durch das Gehäuse hindurchgehenden Verschraubungen, was Dichtungsprobleme aufwerfen würde, sondern in den Außenflächen des Gehäuses sind Befestigungsnuten, vorzugsweise parallel zur Achsrichtung des Meßseil-Wegsensors angeordnet, so daß mit Hilfe von Halteklammem, die am tragenden Bauteil verschraubt werden können, das Gehäuse des Meßseil-Wegsensors an dem tragenden Bauteil fixiert werden kann.

Da der Seileinlauf durch das darüber gleitende Seil stark auf Verschleiß belastet ist, ist der Seileinlauf in der Regel mit einer tüllenförmigen Seildurchführung ausgestattet, die in die Wandung der gewünschten Kammer des Seileinlaufstutzens eingesteckt ist, aber auch zusammen mit dieser einstückig ausgebildet sein kann. Für die Seildurchführung wird vorzugsweise Polyetheretylenketon (PEEK) verwendet, welches besonders hochtemperaturfest und abriebfest ist. PEEK kann als Formteil gespritzt werden oder spanend aus dem Vollem bearbeitet werden.

### e) Ausführungsbeispiele

Eine Ausführungsform gemäß der Erfindung ist im folgenden anhand der Figuren beispielhaft näher beschrieben. Es zeigen:
- Fig. 1:: eine Schnittdarstellung des montierten Meßseil-Wegsensors,
- Figuren 2:: Ansichten der Sensorschale, und
- Figuren 3:: Ansichten der Drehfederschale.

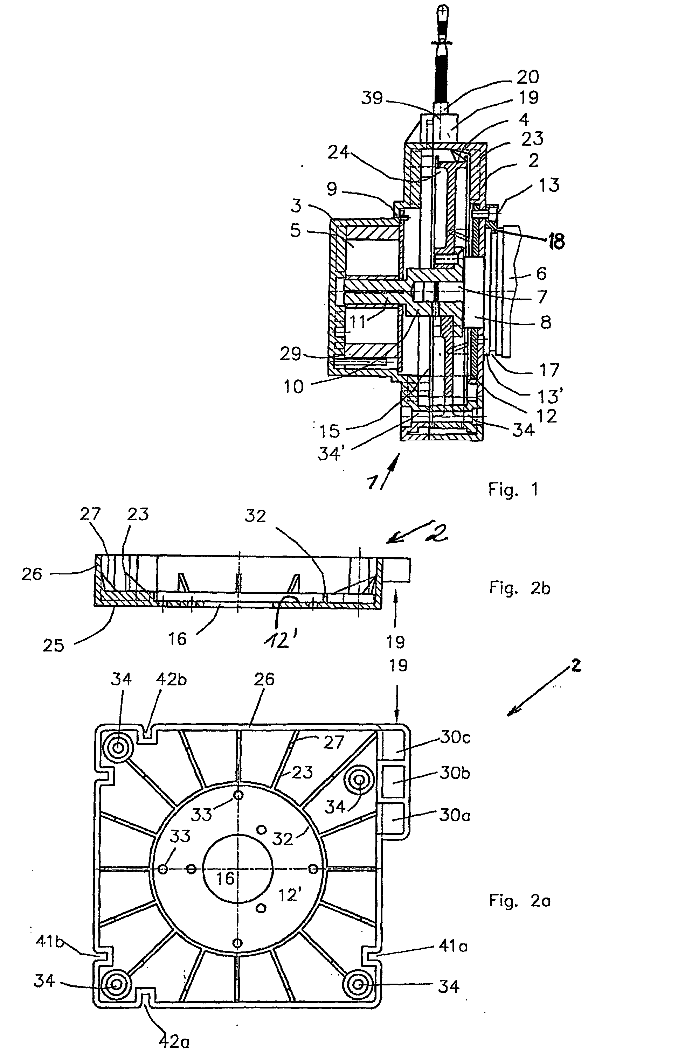

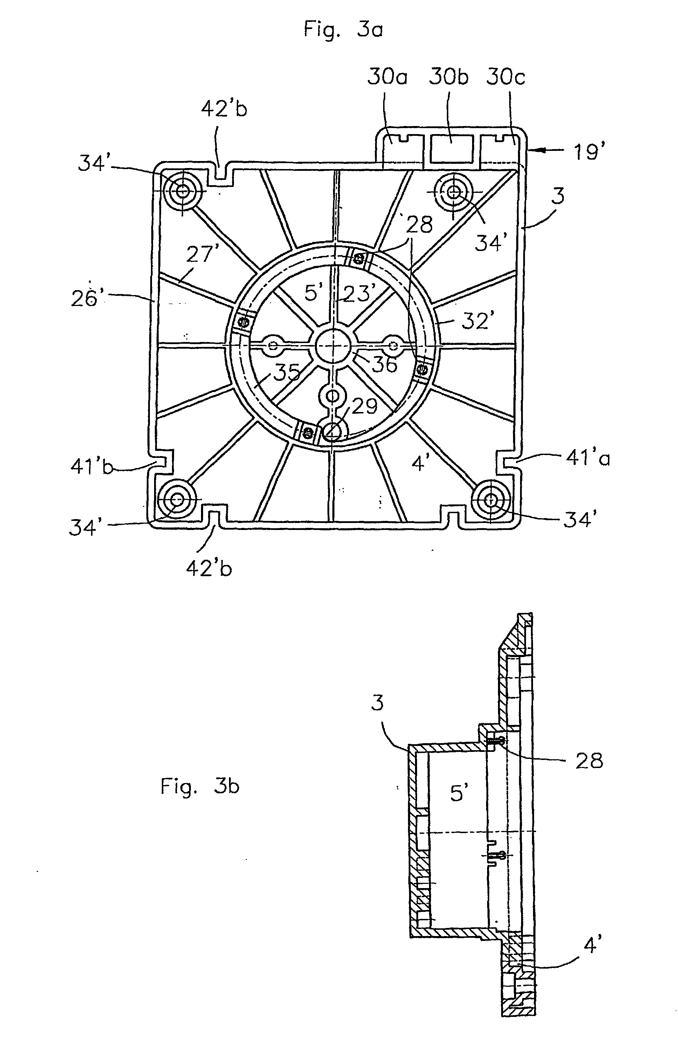

Fig. 1 zeigt den fertig montierten Meßseil-Wegsensor in einer Querschnittsdarstellung, wobei der Drehwinkelsensor 6, der mit dem Gehäuse 1 verbunden ist, nicht vollständig dargestellt ist. Die das Gehäuse primär bildenden Halbschalen, die Sensorschale 2 und die Drehfederschale 3, sind separat in den Figuren 2a, 2b bzw. 3a, 3b in der Aufsicht und in einer Schnittdarstellung dargestellt, wobei die Schnittdarstellung der Blickrichtung der Fig. 1 entspricht.

Beide Schalen sind mit einer im Inneren der Schale liegenden radialen Verrippung ausgestattet, um eine möglichst große Stabilität bzw. die notwendige Stabilität bei geringst möglichem Materialeinsatz und geringst möglichen Wandstärken sicherzustellen. Die Rippen verlaufen dabei strahlenförmig radial in einem Winkelabstand von etwa 20°.

Bei der Sensorschale 2 ist die Verrippung dabei - wie die Figuren 2 zeigen - in radialer Richtung zweigeteilt:

Die ersten, innen liegenden Radialrippen 23 steigen in ihrem radial äußeren Bereich an und enden in einer Spitze, die vom Zentrum der Sensorschale bei jeder Rippe jeweils den gleichen Abstand aufweist. Dieser Abstand ist geringer als der Innendurchmesser des Mantels der Meßseiltrommel 4, welcher außerhalb der ersten Radialrippen 23 umläuft.

Im Abstand radial außerhalb des äußeren Endes der ersten Rippen 23 beginnen die zweiten, radial äußeren Radialrippen 27 wiederum von innen nach außen anzusteigen, welche dann allerdings radial außen nicht frei enden, sondern in die Seitenwände 26 der Sensorschale 2 übergehen.

Wie Fig. 2b zeigt, beginnen die radial inneren, ersten Radialrippen 22 an einem Radialring 32, welcher ebenfalls eine ringförmig vom Boden der Sensorschale aufragende, ringförmige Verrippung darstellt. Die Verrippungen sind einstückig zusammen mit Boden und umlaufenden Seitenwänden der Sensorschale ausgebildet, und auch einstückig zusammen mit dem Seileinlaufstutzen 19, der-wie in Fig. 2a ersichtlich - unterschiedliche Seileinlaufkammern 30a - 30c aufweist. Je nach Auszugsrichtung, Länge des auf der Seiltrommel unterzubringenden Seiles etc. wird der Seileinlauf in einer dieser Kammern wahlweise vorgelegt. Zu diesem Zweck wird ein Seilführungselement 20, welches aus einem hoch abriebfesten und hoch temperaturbeständigen Werkstoff wie etwa PEEK bestehen muß, in einer dieser Kammern angeordnet, welche zusätzlich mit einer Bohrung zum Hindurchführen des Seiles ausgestattet werden muß.

Mittig im Boden des Hauptteiles der Sensorschale 2, welcher im wesentlichen in der Aufsicht quadratisch ausgebildet ist, und an dessen eine Seitenkante in einem Eckbereich der Seileinlaufstutzen 19 mit seinen Seileinlaufkammern 30a - 30c angeordnet ist, und damit zentrisch zu den Verrippungen ist im Boden der Sensorschale 2 die kreisförmige Sensoröffnung 16 angeordnet, durch welche im montierten Zustand der Zentrierbund 8 des außen aufgesetzten Drehwinkelsensors ins Innere des Gehäuses ragt.

Im Boden der Sensorschale 2 sind weiterhin innerhalb des Radialringes 32 mehrere Bohrungen 33 insbesondere im gleichen Abstand zur Mitte der Sensorschale 2 angeordnet. Dieser Anlagebereich 12' dient der Verschraubung eines Stabilisierungsringes 12, welcher auf den Boden der Sensorschale gelegt wird und dessen Außen- und Innendurchmesser so gewählt sind, daß er den Bereich zwischen dem Außenumfang der Sensoröffnung 16 und dem Innenumfang des Radialringes 32 vorzugsweise ganz abdeckt. Die Dicke des Stabilisierungsringes 12 ist kleiner oder maximal gleich der Höhe des Radialringes 32.

Durch die Bohrungen 33 hindurch mittels von außen eingeschraubter Schrauben werden mit dem Stabilisierungsring 12 Teilringklammern 13 verschraubt, die auf der Außenfläche der Stirnplatte 25, also dem Boden, der Sensorschale anliegen, jedoch im Abstand von dieser Stimplatte 25 einen radial nach innen gerichteten Vorsprung 13' aufweisen, welcher sich vorzugsweise ebenfalls über den gesamten Umfangsbereich der Teilringklammem 13 erstreckt. Dieser Vorsprung 13'-paßt in eine Ringnut des Außenumfanges des Drehwinkelsensors 6, wenn dieser an die Außenfläche der Stimplatte 25 so angesetzt ist, daß der Zapfen 7 der Sensorwelle ins Innere der Sensorschale 2 und damit ins Innere des Gehäuses ragt.

Durch Verwendung der Teilringklammern 13 oder auch einer größeren Anzahl nicht mehr halbringförmiger, einzelner Klammem kann eine direkte Verschraubung des Drehwinkelsensors 6 mit dem Gehäuse, beispielsweise mit dessen Stabilisierungsring 12, vermieden werden, und damit das Eindringen punktueller Belastungen in den Drehwinkelsensor.

In den Eckbereichen der Sensorschale 2 befinden sich die ebenfalls durch ringförmig einzeln umlaufende Rippen versteiften Schraubkanäle 34, durch welche hindurch die Verschraubung mit der anderen Halbschale, der Drehfederschale 3, bei der Montage erfolgt, die analoge Schraubkanäle 34' aufweist. In demjenigen Eckbereich, in welchem der Seileinlaufstutzen 19 am Hauptteil der Sensorschale 2 angeordnet ist, befindet sich der entsprechende Schraubkanal 34 auf der Höhe einer für den Seileinlauf nicht benutzbaren, geschlossenen und lediglich der Versteifung dienenden, vorzugsweise mittleren Seileinlaufkammer 30b.

Ferner bilden die Seitenwände 26 auf jeweils je zwei gegenüberliegenden Seiten an einander gegenüberliegenden Positionen lotrecht in der Seitenwand nach innen gerichtete Befestigungsnuten 41a, 41b, 42a, 42b. Diese Befestigungsnuten dienen - im fertig montierten Zustand des Meßseil-Wegsensors - der Befestigung des Sensors an einem nicht dargestellten, ihn tragenden Bauteil der Umgebung, mit Hilfe von ebenfalls nicht dargestellten Halteklammern, welche in diese Befestigungsnuten 41a, 41b, 42a, 42b eingreifen können. Da die Befestigungsnuten keine Öffnung gegenüber dem Inneren des Gehäuses darstellen, ist eine solche Klammerbefestigung einer direkten Verschraubung vorzuziehen, ganz abgesehen von der gleichmäßigeren Krafteinleitung in das Gehäuse.

Aus diesem Grund sind die Paare von Befestigungsnuten 41a, 41b bzw. 42a, 42b relativ nahe an einer der Seiten des Gehäuses angeordnet, und von dort nur soweit zurückversetzt, daß keine Kollision mit den im Eckbereich stattfindenden und durch Ringrippen verstärkten Schraubkanälen 34 auftritt. Vorzugsweise ist jedes der Paare von Befestigungsnuten 41a, 41b Seitenwänden zugeordnet, welche im Winkel zueinander liegen.

Die Drehfederschale gemäß Fig. 3 unterscheidet sich von der Sensorschale 2 grundsätzlich dadurch, daß im Boden der Drehfederschale 3 keine Öffnung vorhanden ist, und - im Querschnitt der Fig. 3b betrachtet - der topfförmige Aufnahmebereich gestuft ausgebildet ist, mit einem mittleren, tieferen Aufnahmebereich 5' für die Drehfeder und mit einem flacheren, radial darum herum angeordneten Aufnahmebereich 4' für die Meßseil-Trommel.

Zwar liegt - gemäß der Schnittdarstellung der Fig. 1 - die Meßseiltrommel 4 vollständig rechts der Berührungsebene 15, also vollständig in der Sensorschale 2, jedoch ist der in der Drehfederschale 3 vorhandene flache Aufnahmebereich 4' notwendig, um je nach Anwendungsfall breitere Meßseil-Trommeln 4 verwenden zu können.

Bei der Drehfederschale 3 ragt der verrippende Radialring 32' am Innenumfang des flacheren Aufnahmebereiches 4' für die Meßseiltrommel auf, und von dort aus erstrecken sich Radialrippen 27' nach außen bis zu den Seitenwänden 26', in welche sie einstückig übergehen. Die Radialrippen 27' steigen dabei nicht nach außen an, sondern behalten ihre Höhe, in der Regel die Höhe des Radialringes 32', über ihre gesamte radiale Erstreckung bei.

Die Ausbildung der Befestigungsnuten 41'a, 41'b, 42'a, 42'b sowie des Seileinlaufstutzens 19' mit den verschiedenen Seileinlaufkammern entspricht derjenigen der Sensorschale 2, und ebenso auch die Schraubkanäle 34'.

Der radial kleinere, jedoch tiefere Aufnahmebereich 5' für die Drehfeder ist zentrisch zur Mitte, also zur späteren Position des Zapfens der Sensorwelle des Drehwinkelsensors 6, ausgebildet, und weist an seinem Außenumfang einen erhöhten umlaufenden Ringflansch auf, von welchem gegen die freie Seite der Drehfederschale hin weisende Zapfen 28 aufragen, die in an sich bekannter Art und Weise mittig in Längsrichtung vom freien Ende her geschlitzt ausgeführt sind, und dem Aufstecken des in Fig. 1 eingezeichneten plattenförmigen Anlaufdeckels 9 dienen, dessen Außenumfang etwa dem Innenumfang des Radialringes 32' entspricht. Der Ringflansch 35 ist teilweise exzentrisch entlang des Innenumfanges des Radialringes 32 angeordnet, indem der Ringflansch 35 über etwa einen Viertelkreis eine abnehmende Breite aufweist, und dadurch an einer Stelle ein Breitensprung in den Ringflansch 35 entsteht. In diesem Breitensprung ist ein Sackloch 29, welches ebenfalls von der Innenseite der Drehfederschale 3 her zugänglich ist, angeordnet, welches der späteren Festlegung des Endes der gewickelten Drehfeder 5 im Aufnahmebereich 5' dient, vorzugsweise mit Hilfe eines in das Sackloch 29 eingesteckten Bolzens, welches mit dem am Außenumfang der Drehfeder 5 angeordneten Ende der Drehfeder verbunden ist.

Das innere Ende der Wicklung der Drehfeder 5 wird in den Längsschlitz des Mitnehmerzapfens 11 eines Adapters 10 gesteckt, der drehfest fluchtend und koaxial auf den Zapfen 7 am Ende der Sensorwelle aufgesteckt und mittels handelsüblicher Klemmverschraubung mit dieser verbunden ist, wie Fig. 1 zeigt

Im Böden des innen liegenden, tieferen Aufnahmebereiches 5' sind ebenfalls innere Radialrippen 23' angeordnet, welche ebenfalls eine gleich bleibende Höhe aufweisen und von einem inneren Radialring 36 aus nach außen laufen in die Umfangswände dieses tieferen Aufnahmebereiches 5' hinein.

Fig. 1 zeigt den montierten Zustand des Meßseil-Wegsensors. Dabei ist das mit einem Gummistopper 37 bestückte Ende des ansonsten nicht dargestellten Meßseiles, an dessen Ende sich eine Befestigungsöse 38 befindet, dargestellt. Das nur durch gestrichelte Linie 39 angedeutete Meßseil ist auf dem Umfang der Meßseit-Trommel 4 aufgewickelt. Diese ist mit dem Adapter 10 drehfest und winkelfest verbunden, indem dieser die mittige Öffnung der Seiltrommel durchdringt und mit dieser in Axialrichtung verschraubt ist.

In dem von der Drehfeder 5 abgewandten Ende weist der Adapter 10 eine axiale Bohrung zum Einstecken des Zapfens 7, also des Endes der Sensorwelle, auf. Die Montage des Meßseil-Wegsensors läuft in folgender Reihenfolge ab:

Einerseits wird an der Sensorschale der Drehwinkelsensor mittels Stabilisierungsring 12 und Teilringklammem 13 befestigt.

Andererseits wird am Adapter 10 zunächst die Meßseiltrommel 4 zusammen mit dem Meßseil befestigt, und anschließend auf den Mitnehmerzapfen 11 des Adapters zum einen der Anlaufdeckel und zum anderen die Drehfeder 5 aufgesteckt Die gesamte Einheit wird nun in die Drehfederschale 3 eingesetzt und dabei auch das außenliegende Ende der Drehfeder 5 in dem Sackloch 29 fixiert und der Anlaufdeckel 9 auf die Zapfen 28 der Drehfederschale 3 aufgesteckt.

Anschließend werden die beiden vormontierten Halbschalen, also die Sensorschale 2 und die Drehfederschale 3, gegeneinandergesetzt unter Einlegen des Seiles in die gewünschte Seileinlaufkammer 30a bzw. 30c, die durch entsprechendes Anordnen einer Bohrung oder eines Schlitzes sowie Montieren eines Seilführungselementes 20 darin vorbereitet sind.

Nach Verschrauben der beiden Halbschalen durch die Schraubkanäle 34, 34' hindurch ist die Montage beendet, und der Meßseil-Wegsensor kann mittels der Befestigungsnuten 41a, 41b bzw. 42a, 42b und mit diesen zusammenpassenden Klammem an einem Bauteil der Umgebung befestigt werden.

## Patentansprüche

1. Meßseil-Wegsensor mit
- einem Gehäuse (1),
- in welchem die Meßseil-Trommel (4) sowie die Drehfeder (5) untergebracht sind und
- einem Drehwinkelsensor (6), der mit dem Gehäuse (1) verbunden ist,
**dadurch gekennzeichnet, daß**
die Meßseil-Trommel (4) im axialen Längenbereich des aus dem Drehwinkelsensor (6) vorstehenden Zapfens (7) der Sensorwelle drehfest konzentrisch fluchtend auf dem Zapfen (7) befestigt ist.

2. Meßseil-Wegsensor nach Anspruch 1,
**dadurch gekennzeichnet, daß**
der Drehwinkelsensor (6) außen auf dem Gehäuse (1) angeordnet ist, und insbesondere das Gehäuse (1) aus nur zwei topfförmigen Halbschalen, nämlich der Drehfederschale (3), in welcher die Drehfeder (5) untergebracht ist, und der Sensorschale (2), auf welcher außen der Drehwinkelsensor (6) befestigt ist, besteht.

3. Meßseil-Wegsensor nach einem der vorhergehenden Ansprüche,
**dadurch gekennzeichnet, daß**
die Meßseil-Trommel (4) auf dem Zapfen (7) der Sensorwelle mittelbar über einen Adapter (10) drehfest befestigt ist, und der Adapter einen über das freie Ende des Zapfens (7) fluchtend mit diesem vorstehenden Mitnehmerzapfen (11) für die Drehfeder aufweist, welcher mit seinem freien Ende in einen Innenumfang der Drehfederschale (3) hineinragt, insbesondere sich dort radial abstützt.

4. Meßseil-Wegsensor nach einem der vorhergehenden Ansprüche,
**dadurch gekennzeichnet, daß**
der Drehwinkelsensor (6) an der Außenseite der Sensorschale (2) zentrisch zur Sensoröffnung (16) befestigt ist, indem auf der Innenseite der Sensorschale ein Stabilisierungsring (12) angeordnet und durch die Sensorschale (3) hindurch gegen Halteklammem, insbesondere wenigstens zwei Teilringklammern (13), verschraubt ist, welche radial nach innen, in eine entsprechende Nut (17) oder Vertiefungen in der Umfangsfläche des Drehwinkelsensors eingreifende Haltenasen (18) aufweisen, und insbesondere die Sensorschale (2) im Anlagebereich (12') für den Stabilisierungsring (12) plattemörmig gestaltet ist und radial außerhalb der Anlagefläche (12') im wesentlichen radial nach außen verlaufende und schräg ansteigende erste Radialrippen (23) aufweist, welche radial innerhalb des Mantels (24) der Meßseiltrommel (4) enden.

5. Meßseil-Wegsensor nach einem der vorhergehenden Ansprüche,
**dadurch gekennzeichnet, daß**
die Berührungsebene (15) zwischen der Sensorschale (2) und der Drehfederschale (3) durch den Seileinlaufstutzen (19) des Gehäuses (1) hindurch verläuft, in welchem ein Seilführungselement (20) anordenbar ist, und insbesondere die Berührungsebene (15) zwischen der Sensorschale (2) und der Drehfederschale (3) in axialer Richtung zwischen der Drehfeder (5) und der Meßseiltrommel (4) oder im Bereich der Meßseiltrommel (4) liegt.

6. Meßseil-Wegsensor nach einem der vorhergehenden Ansprüche,
**dadurch gekennzeichnet, daß**
der freie innere Querschnitt der Sensorschale (2) größer ist als der Außenumfang der Meßseil-Trommel (4) und im Bereich außerhalb des Außenumfanges der Meßseil-Trommel (4) zwischen der Stirnplatte (25) und den Seitenwänden (26) der Sensorschale radial nach außen schräg ansteigende zweite Radialrippen (27) angeordnet sind.

7. Meßseil-Wegsensor nach einem der vorhergehenden Ansprüche,
**dadurch gekennzeichnet, daß**
die Drehfederschale (3) einen zentralen, axial tieferen Aufnahmebereich (5') für die Drehfeder (5) und einen axial flacheren Aufnahmebereich (4') mit größerem Durchmesser für die Meßseil-Trommel (4) aufweist, und am Übergang zwischen den Aufnahmebereichen (5') und (4') gegen den größeren Aufnahmebereich (4') abragende Zapfen (28) zum Aufstecken eines Anlaufdeckels (9) angeordnet sind.

8. Meßseil-Wegsensor nach einem der vorhergehenden Ansprüche,
**dadurch gekennzeichnet, daß**
sowohl der Bodenbereich des tiefen Aufnahmebereiches (5') als auch der Bodenbereich des radial darum herum angeordneten Aufnahmebereiches (4') auf der Innenseite der Drehfederschale (3) radial verrippt sind.

9. Meßseil-Wegsensor nach einem der vorhergehenden Ansprüche,
**dadurch gekennzeichnet, daß**
sowohl die Sensorschale (2) als auch die Drehfederschale (3) einstückig ausgebildete, halbschalenförmige Fortsätze als Seileinlaufstutzen (19) aufweisen, welche in radial zur Achsrichtung wenigstens zwei aneinander anschließende Seileinlaufkammern (30a, 30b, 30c) unterteilt ist, um den Seileinlauf je nach Durchmesser der Meßseiltrommel (4) vorsehen zu können.

10. Meßseil-Wegsensor nach einem der vorhergehenden Ansprüche,
**dadurch gekennzeichnet, daß**
die Sensorschale (2) und Drehfederschale (3) in axialer Blickrichtung übereinstimmende Umfangskonturen aufweisen, und insbesondere das Gehäuse (1) eine im wesentlichen rechteckige Außenkontur aufweist, und insbesondere die Verschraubung von Sensorschale (2) und Drehfederschale (3) gegeneinander in den Eckbereichen erfolgt und der Seileinlaufstutzen (19) in einem Eckbereich angeordnet ist, und in diesem Eckbereich die Verschraubung zwischen den beiden Seileinlaufkammern (30a) und (30c) angeordnet ist.

11. Meßseil-Wegsensor nach einem der vorhergehenden Ansprüche,
**dadurch gekennzeichnet, daß**
in den Seitenflächen des Gehäuses (1) in axialer Richtung verlaufende, auf jeweils zwei gegenüberliegenden Seitenflächen mit gleichem Abstand zur verbindenden Seitenfläche angeordnete Befestigungsnuten (41 a, 41 b, 42a, 42b) angeordnet sind, um das Gehäuse (1) mittels Halteklammem formschlüssig an anderen Baugruppen befestigen zu können.

12. Meßseil-Wegsensor nach einem der vorhergehenden Ansprüche,
**dadurch gekennzeichnet, daß**
die Sensorschale (2) sowie die Drehfederschale (3) aus Kunststoff, insbesondere aus POM bzw. PBTP als Spritzgußteil hergestellt sind.

## Claims

1. A measuring cable displacement sensor comprising a housing (1),where there are arranged the measuring cable drum (4) as well as the spring (5), and a rotating angle sensor (6) connected to the housing (1) **characterized in that** the measuring cable drum (4) is fixed in a non-rotational concentric aligned relationship on the trunnion portion (7) of the sensor shaft of the rotating angle sensor (6) in the axial lengthwise region of the trunnion portion.

2. A measuring cable displacement sensor according to claim 1, **characterized in that** the rotating angle sensor (6) is arranged on the outside of the housing (1), and in particular the housing (1) comprises only two substantially cup shaped portions, namely a first shell portion (3) accommodating the spring (5) and a second shell portion (2) having the rotating angle sensor (6) arranged on its outside.

3. A measuring cable displacement sensor according to any one of the preceding claims, **characterized in that** by means of an adapter (10), the measuring cable drum (4) is non-rotatingly fixed to the trunnion portion (7) of the sensor shaft, and the adapter (10) has an entertainment trunnion portion (11) which projects beyond the free end of the sensor shaft trunnion portion in an aligned relationship therewith and which has a free end extending into an inner periphery of the above mentioned first shell portion (3).

4. A measuring cable displacement sensor according to any one of the preceding claims, **characterized in that** the rotating angle sensor (6) is fixed to the outside of the second shell portion (2) in a concentric relationship with the sensor opening (16), while on the inner side of the second shell portion is arranged and screwed through the second shell portion (2) by means of holding clips, in particular at least two part-annular clips (13), a stabilising ring (12) which has holding noses (18) engaging radially inwardly into a groove (17) in the peripheral surface of the rotating angle sensor, and in particular the second shell portion (2) is of a plate shaped configuration in a contact region (12') for the stabilising ring (12) and radially outwardly of the above mentioned contact region (12') it has substantially radially outwardly extending inclinedly rising first ribs (23) which come to an end radially within the peripheral casing portion (24) of the measuring cable drum (4).

5. A measuring cable displacement sensor according to any one of the preceding claims, **characterized in that** the contact plane (15) extends between the second shell portion (2) and the first shell portion (3) cutting off the cable entry portion (19) of the housing (1), wherein it may be arranged a cable guiding element (20), and in particular the contact plane (15) between the second shell portion (2) and the first shell portion (3) is arranged in the axial direction between the spring (5) and the measuring cable drum (4) or in the measuring cable drum (4) region.

6. A measuring cable displacement sensor according to any one of the preceding claims, **characterized in that** the free internal cross-section of the second shell portion (2) is greater than the outer periphery of the measuring cable drum (4) and, included in the region outside the outer periphery of the cable drum between the second shell portion front plate (25) and side walls (26), there are arranged radially outwardly and inclinedly rising second radial ribs (27).

7. A measuring cable displacement sensor according to any one of the preceding claims, **characterized in that** the first shell portion (3) has a central receiving region (5') for accommodating the above mentioned spring (5), and an axially arranged shallower region (4') than the first receiving region but having instead a larger diameter for accommodating the cable drum (4), and above, between the receiving regions (5') and (4'), and orientated towards the greater receiving region (4'), there are protruding pins or projections (28) for mounting a contact cover (9).

8. A measuring cable displacement sensor according to any one of the preceding claims, **characterized in that** both the bottom portions of the deeper receiving region (5') and of the second receiving region (4'), which is radially arranged around it inside the first shell portion (3), are radially ribbed.

9. A measuring cable displacement sensor according to any one of the preceding claims, **characterized in that** both the second shell portion (2) and the first shell portion (3) have integrally formed thereon protrusion portions of a half shell configuration constituting a cable entry portion (19) which is radially divided with respect to the axial direction of the displacement sensor into at least two adjoining cable entry chambers (30a, 30b, 30c) to enable thus the cable entry to be adapted to a respective diameter of the cable drum (4).

10. A measuring cable displacement sensor according to any one of the preceding claims, **characterized in that** both the second shell portion (2) and the first shell portion (3) have peripheral contours which coincide in the axial direction of view, and in particular the housing (1) has a substantially rectangular external contour, and in particular the screwing of the second shell portion (2) to the first shell portion (3) takes place in the corner regions, and the cable entry portion (19) is arranged in a corner region where in its turn the screwing place too is arranged between the cable entry chambers (30a) and (30c).

11. A measuring cable displacement sensor according to any one of the preceding claims, **characterized in that** there are fixing grooves (41a, 41b, 42a, 42b) extending in the side surfaces of the housing (1) in the axial direction of the displacement sensor, and arranged on each mutually opposite side surfaces at an equal spacing to the adjoining side surfaces in order to provide an appropriate locking of the housing (1) to the structural means by holding clips.

12. A measuring cable displacement sensor according to any one of the preceding claims, **characterized in that** both the second shell portion (2) and the first shell portion (3) are produced in the form of an injection moulding, in particular from POM, respectively PPTP.

## Revendications

1. Senseur de déplacement avec câble de mesure, avec:
- une carcasse (1)
- dans laquelle sont remplacés le tambour pour le câble de mesure et le ressort hélicoïdal (5) et
- un senseur de l'angle de rotation (6) qui est fixé sur la carcasse (1)
**caractérisé en ce que**, le tambour pour le câble de mesure (4) est fixé dans la zone longitudinale axiale du tenon (7) qui se trouve devant l'axe du senseur qui sort du senseur de l'angle de rotation (6), de manière rigide à rotation et aligné concentriquement sur le tenon (7).

2. Senseur de déplacement avec câble de mesure selon la revendication 1, **caractérisé en ce que**, le senseur de l'angle de rotation (6) est fixé dans l'extérieur sur la carcasse (1) qui consiste de deux parties en forme de pot, précisément la demi carcasse du ressort hélicoïdal (5) et la demi carcasse du senseur (2) sur laquelle est fixé dans l'extérieur le senseur de l'angle de rotation (6).

3. Senseur de déplacement avec câble de mesure selon l'une des revendications antérieures, **caractérisé en ce que**, le tambour pour le câble de mesure (4) par l'entremise d'un adapter (10) est fixé de manière rigide à la rotation sur le tenon (7) de l'axe du senseur et l'adapter présente un tenon de guidage pour le ressort hélicoïdal et qui se trouve devant l'extrémité libre du tenon (7), aligné avec celui-ci et qui pénètre, avec son bout libre dans le périmètre intérieur de la demi carcasse du ressort hélicoïdal, précisément il s'appuie en direction radiale là.

4. Senseur de déplacement avec câble de mesure selon l'une des revendications antérieures, **caractérisé en ce que**, le senseur de l'angle de rotation (6) est fixé sur la partie extérieure de la demi carcasse du senseur (2) en position centrer par rapport à l'orifice circulaire du senseur (16) pendant que sur la partie intérieure de la demi carcasse du senseur est placé un anneau de stabilisation (12) et qui est vissage de la demi carcasse du senseur (2) à l'aide des brides de fixation, précisément au moins deux brides de fixation type anneau coupé (13) qui ont dans la direction radiale vers l'intérieur dans une cannelure (17) ou un creux situé sur la surface périphérique du senseur de l'angle de rotation, des proéminences d'arrêt 18 et surtout la demi carcasse du senseur (2) dans la zone de positionnement (12') pour l'anneau de stabilisation (12) qui est en forme de plaque et en position radiale vers l'extérieur de la zone de positionnement (12') il y a les premières nervures radiales 23 qui se déroulent dans la direction oblique, ascendantes vers l'extérieur, et qui se terminent dans la direction radiale à l'intérieur de l'enveloppe (24) du tambour du câble de mesure.

5. Senseur de déplacement avec câble de mesure, selon l'une des revendications antérieures, **caractérisé en ce que**, le plan de contact (15) d'entre la demi carcasse du senseur (2) et la demi carcasse du ressort hélicoïdal (3) passe par le raccord d'entrée du câble (19) de la carcasse (1) où est placé un élément de guidage pour la câble (20) et en particulier le plan de contact (15) entre la demi carcasse du senseur (2) et la demi carcasse du ressort hélicoïdal (3) est situé dans la direction axiale entre le ressort hélicoïdal (5) et le tambour pour le câble de mesure (4) ou dans la zone du tambour pour le câble de mesure.

6. Senseur de déplacement avec câble de mesure, selon l'une des revendications antérieures, **caractérisé en ce que**, la section transversale intérieure libre de la demi carcasse du senseur (2) est plus grande que la circonférence extérieure du tambour pour le câble de mesure (4) et dans la zone extérieure du tambour pour le câble de mesure (4) entre la plaque frontale (25) et sur les parois latérales (26) de la demi carcasse du senseur sont placées des nervures radiales secondaires (27).

7. Senseur de déplacement avec câble de mesure, selon l'une des revendications antérieures, **caractérisé en ce que**, la demi carcasse du ressort hélicoïdal présente une zone centrale plus approfondie dans la direction axiale (5') pour le ressort hélicoïdal (5) et une zone moins profonde dans la direction axiale (4') avec un diamètre plus grand pour le tambour pour le câble de mesure (4) et au dessus entre les zones (5') et (4'), orientés vers la zone (4') plus grande, se trouvent les tenons (28) pour l'introduction d'un couvercle d'arrêt (9).

8. Senseur de déplacement avec câble de mesure, selon l'une des revendications antérieures, **caractérisé en ce que**, tant la zone de base de la zone plus approfondie (5') aussi bien que la zone de base de la zone moins profonde (4') placée en direction radiale tout autour, sont nervurées en direction radiale sur la partie intérieure de la demi carcasse du ressort hélicoïdal (3)

9. Senseur de déplacement avec câble de mesure, selon l'une des revendications antérieures, **caractérisé en ce que**, tant la demi carcasse du senseur (2), que la demi carcasse du ressort hélicoïdal (3) sont formées d'une seule pièce avec des annexes comme par exemple le raccord d'entrée du câble qui dans la direction radiale à la direction de l'axe est divisé en au moins deux compartiments d'entrée du câble (30a, 30b, 30c), mis à côté, de sorte que on puisse prévoir le lieu d'entrée du câble en fonction du diamètre du tambour pour le câble de mesure.

10. Senseur de déplacement avec câble de mesure, selon l'une des revendications antérieures, **caractérisé en ce que**, la demi carcasse du senseur (2) et la demi carcasse du ressort hélicoïdal (3) présentent des contours de leur circonférences qui s'assemblent bien l'une avec l'autre et précisément la carcasse (1) présente un contour extérieur rectangulaire et le vissage de la demi carcasse du senseur (2) avec la demi carcasse du ressort hélicoïdal (3) a lieu dans les zones des coins et le raccord d'entrée du câble (19) est placé dans la zone de coin et dans cette zone de coin le lieu de vissage se trouve entre les compartiments d'entrée du câble (30a) et (30c).

11. Senseur de déplacement avec câble de mesure, selon l'une des revendications antérieures, **caractérisé en ce que**, dans les surfaces latérales de la carcasse (1) sur chacune des deux surfaces latérales qui se trouvent face à face sont placées dans la direction axiale des cannelures de fixation (41a, 41b, 42a, 42b) à la même distance par rapport aux surfaces latérales, pour pouvoir fixer la carcasse de manière correspondante d'autres parties constructives, par l'entremise des brides de fixation.

12. Senseur de déplacement avec câble de mesure, selon l'une des revendications antérieures, **caractérisé en ce que**, la demi carcasse du senseur (2) aussi bien que la demi carcasse du ressort hélicoïdal (3) sont réalisées comme pièces par l'injection de matières plastiques, précisément de POM respectivement PPTP.
